# EUROPEAN PATENT APPLICATION

(11) **EP 4 779 552 A1**
(43) Date of publication of application: **22.07.2026**
(21) Application number: 25786888.5
(22) Date of filing: 11.04.2025
(51) Int. Cl.: G06Q 50/10, B01D 53/04

(54) **RECOVERY MANAGEMENT METHOD, RECOVERY MANAGEMENT SERVER, AND ADSORPTION DEVICE**

(30) Priority: 11.04.2024 JP 2024064291
(71) Applicant: Kojima Industries Corporation, Toyota-shi, Aichi 471-8588 (JP)
(72) Inventor: MATSUI, Hideki, Toyota-shi, Aichi 471-8588 (JP); KATO, Yuichi, Toyota-shi, Aichi 471-8588 (JP); MURAYAMA, Ryogo, Toyota-shi, Aichi 471-8588 (JP)
(74) Representative: Hoffmann Eitle
(86) International application number: PCT/JP2025/014512
(87) International publication number: WO 2025/216316

(57) **Abstract**

A recovery management method according to the present invention includes recovering, after a transportation vehicle on which an adsorption device capturing carbon dioxide is installed travels, carbon dioxide captured by the adsorption device, and managing the transportation vehicle and a carbon dioxide recovery amount of the adsorption device installed on the transportation vehicle in association with each other.

## Description

### Field

The present disclosure relates to a recovery management method, a recovery management server, and an adsorption device.

### Background

In recent years, a technique for recovering carbon dioxide and utilizing the recovered carbon dioxide has been developed in order to achieve carbon neutrality. In general, the recovery and storage of carbon dioxide is referred to as Carbon dioxide Capture and Storage (CCS), and the utilization of carbon dioxide is referred to as Carbon dioxide Capture, Utilization and Storage (CCUS). In this effort, in order to capture carbon dioxide in the atmosphere, a technique of equipping vehicles with carbon dioxide capturing materials has been studied (see, for example, Patent Literature 1).

### Citation List

### Patent Literature

Patent Literature 1: JP 2023-128695 A

### Summary

### Technical Problem

Incidentally, it is possible to easily capture carbon dioxide in a wide range by equipping vehicles with carbon dioxide capturing materials. Meanwhile, there is a demand for a technique for efficiently recovering carbon dioxide captured by the carbon dioxide capturing materials.

The present disclosure has been made in view of the above, and an object of the present disclosure is to provide a recovery management method, a recovery management server, and an adsorption device that are capable of efficiently recovering carbon dioxide captured by a carbon dioxide capturing material.

### Solution to Problem

A recovery management method according to the present invention includes: recovering, after a transportation vehicle on which an adsorption device capturing carbon dioxide is installed travels, carbon dioxide captured by the adsorption device; and managing the transportation vehicle and a carbon dioxide recovery amount of the adsorption device installed on the transportation vehicle in association with each other.

In the recovery management method according to the present invention, the carbon dioxide is recovered after the adsorption device is separated from the transportation vehicle.

A recovery management server according to the present invention includes: an acquiring unit acquires, after a transportation vehicle on which an adsorption device capturing carbon dioxide is installed travels, a recovery amount of carbon dioxide captured by the adsorption device; and a control unit generates management information in which the recovery amount is associated with the transportation vehicle on which the adsorption device is installed.

In the recovery management server according to the present invention, the control unit determines adsorption performance of the adsorption device based on the management information.

In the recovery management server according to the present invention, the control unit calculates a predicted recovery amount of the adsorption device based on the management information.

In the recovery management server according to the present invention, the management information further includes a use history of the adsorption device, and the control unit generates information necessary for maintaining or improving performance of the adsorption device based on the use history of the adsorption device.

In the recovery management server according to the present invention, the management information further includes operation information about the transportation vehicle, and the control unit calculates a predicted recovery amount of carbon dioxide based on the use history of the adsorption device and the operation information about the transportation vehicle.

An adsorption device according to the present invention includes: a plate-shaped adsorbent adsorbing carbon dioxide; a first filter provided on one adsorption surface side in a thickness direction of the adsorbent; and a second filter provided on the other adsorption surface side in the thickness direction of the adsorbent. Further, the adsorbent is attached with a code on a part of a side surface to identify information about the adsorbent. Advantageous Effects of Invention

According to the present disclosure, it is possible to efficiently recover carbon dioxide captured by a carbon dioxide capturing material.

### Brief Description of Drawings

FIG. 1 is a schematic diagram illustrating an outline of a carbon dioxide recovery system according to an embodiment of the present invention.
FIG. 2 is a diagram for explaining a configuration of an adsorption structure included in an adsorption device.
FIG. 3 is a diagram illustrating a configuration of an adsorbent included in the adsorption structure.
FIG. 4 is a block diagram for explaining information communication in the recovery system.
FIG. 5 is a flowchart illustrating an example of a process executed by the recovery system, and illustrates a procedure of a management information generation process by a management server.
FIG. 6 is a flowchart illustrating an example of a process executed by the recovery system, and illustrates a procedure of an information output process regarding the necessity of replacing the adsorption device.

### Description of Embodiments

Hereinafter, a carbon dioxide recovery system according to an embodiment of the present invention will be described specifically. Note that the present invention is not limited to the embodiments described below.

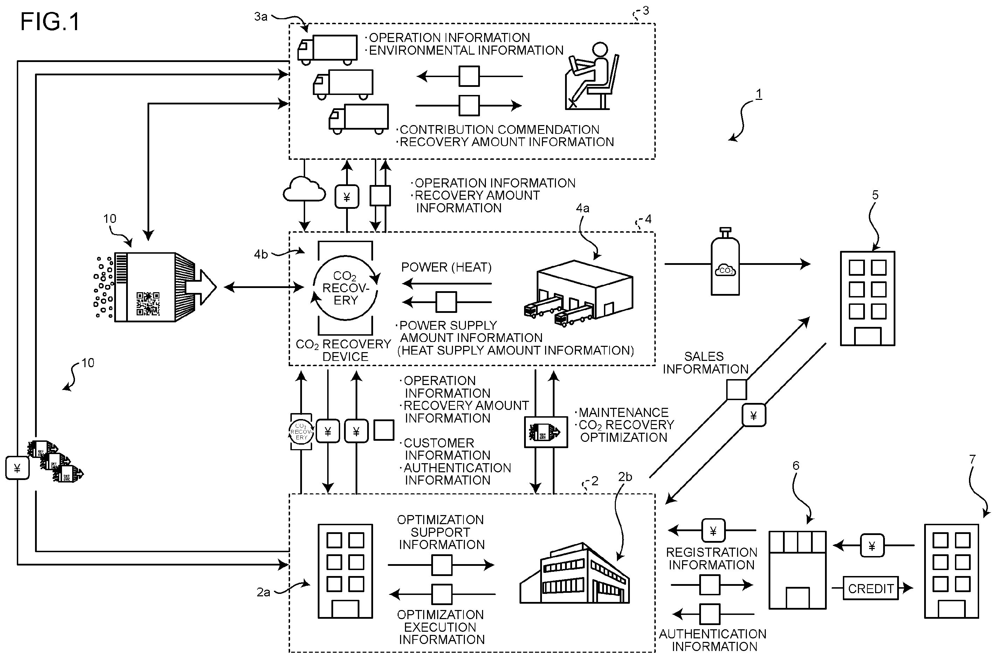

FIG. 1 is a schematic diagram illustrating an outline of a carbon dioxide recovery system according to an embodiment of the present invention. A recovery system 1 includes a management base 2, a transportation base 3, and a recovery base 4. In the recovery system 1, the management base 2 is communicably connected to a J-Credit management base 6. Note that the J-Credit management base 6 supplies credit to a J-Credit purchasing company 7 in exchange for money.

The management base 2 includes a management facility 2a including a management server 20, which is described later, and a manufacturing facility 2b that manufactures and maintains a recovery device 4b and an adsorption device 10.

In the management facility 2a, the adsorption device 10, which is a carbon dioxide capturing material, is supplied to the transportation base 3 in exchange for money. In addition, the management facility 2a supplies the recovery device 4b to the recovery base 4, and exchanges various types of information. The various types of information include operation information about the recovery device 4b, a carbon dioxide recovery amount, customer information, authentication information, maintenance information about the adsorption device 10 and the recovery device, carbon dioxide recovery optimization information, and the like. In addition, the management facility 2a provides a purchasing company 5, which purchases carbon dioxide, with sales information in exchange for money. Furthermore, the management facility 2a acquires the authentication information from the J-Credit management base 6 in exchange for registration information including a project and the like, and acquires money in exchange for information including a monitoring report and the like.

In the manufacturing facility 2b, the adsorption device 10 is manufactured and maintained.

The transportation base 3 includes a transportation vehicle 3a, such as a truck, and functions as an arrival and departure base of the transportation vehicle 3a. In the transportation base 3, regarding the transportation vehicle 3a, operation information and environmental information are acquired from the driver, and contribution commendation and recovery amount information are provided to the driver.

The recovery base 4 includes a recovery facility 4a and the recovery device 4b provided in the recovery facility 4a. In the recovery facility 4a, power and heat are supplied to the recovery device 4b, and supply amount information about power (heat) is provided. From the viewpoint of environmental consideration, it is preferable to use natural energy for recovery of carbon dioxide. For example, it is preferable to use solar power generation as power to be supplied, and it is preferable to use heat generated in a factory or the like as heat to be supplied. The recovery device 4b recovers carbon dioxide captured by the adsorption device 10 by heating the adsorption device 10 (adsorbent) with electric power or heat supplied via the recovery facility 4a. In addition, the recovery base 4 supplies the recovered carbon dioxide to the purchasing company 5.

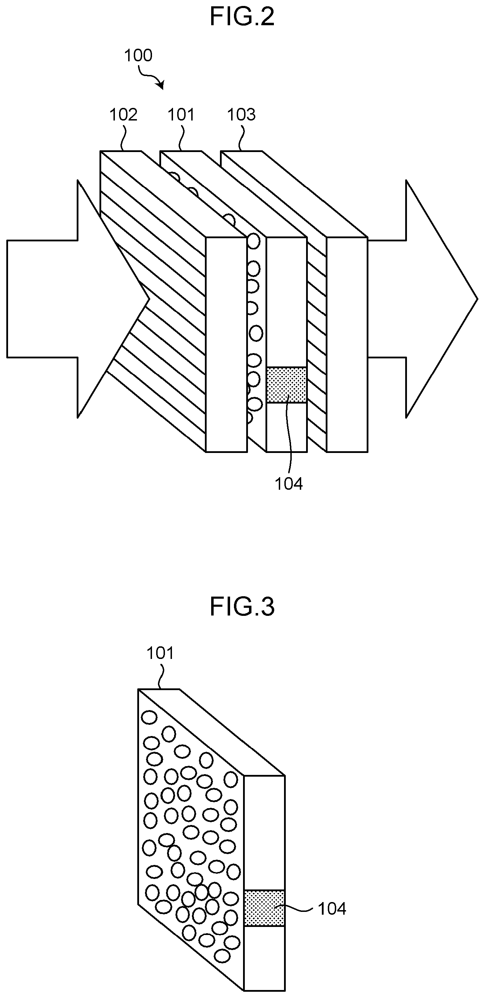

Here, an adsorption structure included in the adsorption device 10 will be described with reference to FIGS. 2 and 3. FIG. 2 is a diagram for explaining a configuration of the adsorption structure included in the adsorption device. An adsorption structure 100 includes an adsorbent 101, a first filter 102, and a second filter 103. Note that the adsorption device 10 houses the adsorption structure 100 in a package, a case, or the like.

FIG. 3 is a diagram illustrating a configuration of the adsorbent included in the adsorption structure. The adsorbent 101 has a plate shape formed using, for example, an inorganic metal oxide, and adsorbs carbon dioxide. The carbon dioxide adsorbed by the adsorbent 101 can be recovered by heating in the recovery device 4b, for example. In the present embodiment, an example in which the adsorbent 101 has a plate shape will be described.

In addition, a code 104 for identifying information about the adsorbent 101 is attached to a part of a side surface of the adsorbent 101. As the code 104, a known identifier, such as a barcode or a quick response (QR) code, can be used.

The first filter 102 is provided on one adsorption surface side in the thickness direction of the adsorbent 101. The first filter 102 captures fine particles, such as dust and dirt, while passing carbon dioxide.

The second filter 103 is provided on the other adsorption surface side in the thickness direction of the adsorbent 101. The second filter 103 captures fine particles, such as dust and dirt, while passing carbon dioxide.

For example, the adsorption device 10 takes in the atmosphere from the first filter 102 side, captures carbon dioxide that has passed through the first filter 102 with the adsorbent 101, and exhausts gas that has passed through the adsorbent 101 to the outside from the second filter 103. Note that the hole diameter (mesh size) of each of the first filter 102 and the second filter 103 can be set according to the installation position on the intake or exhaust side of the atmosphere.

The adsorption device 10 is installed at a position where wind can be taken in when the transportation vehicle 3a travels. For example, in a case of a truck, installation under the cargo bed is preferable from the viewpoint of taking in wind and the detachability of the adsorption device 10.

As described above, by installing the adsorption device on a transportation vehicle, carbon dioxide is adsorbed by the adsorption device as the transportation vehicle travels. At this time, the energy required for adsorption is only the power of traveling.

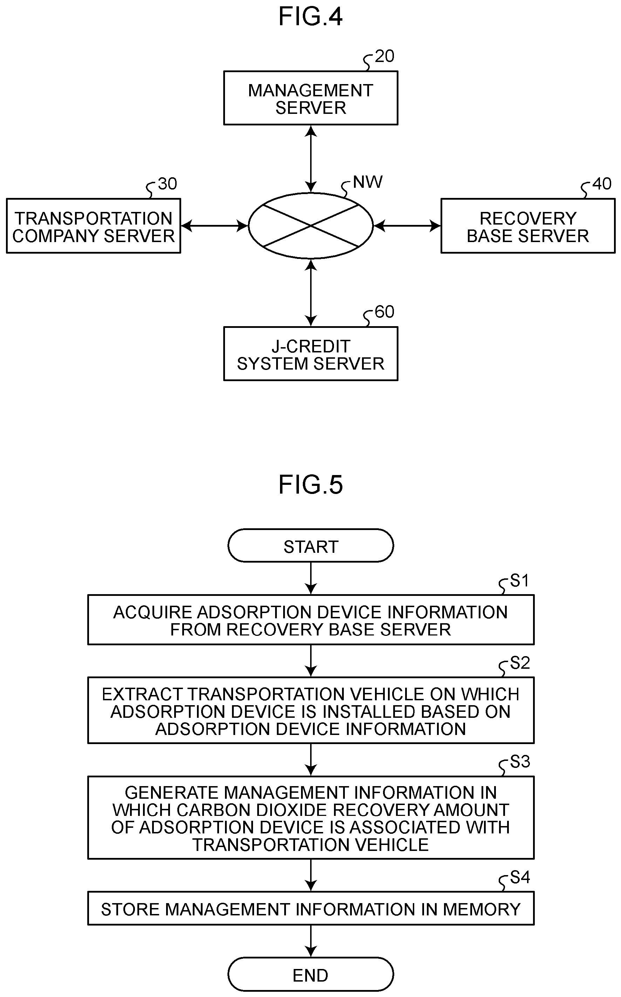

Next, information communication between the facilities and bases in the recovery system will be described with reference to FIG. 4. FIG. 4 is a block diagram for explaining the information communication in the recovery system. In the recovery system 1, a management server 20 provided in the management facility 2a, a transportation company server 30 provided in the transportation base 3, and a recovery base server 40 provided in the recovery facility 4a are communicably connected via a network NW. The network NW is configured by, for example, an internet line network or the like. Furthermore, a J-Credit system server 60 provided in the J-Credit management base 6 is communicably connected to the management server 20 and the like via the network NW.

Each of the servers includes a processor and a memory. The processor is configured using a central processing unit (CPU), a digital signal processor (DSP), a field-programmable gate array (FPGA), and the like. The memory is configured using a random access memory (RAM), a read only memory (ROM), and the like. The processor loads a program stored in the memory into the work area and executes the program to implement a process of a predetermined purpose through the execution of the program. As the memory, a recording medium, such as an erasable programmable ROM (EPROM) or a hard disk drive (HDD), or a removable medium, such a universal serial bus (USB) memory, a compact disc (CD), a digital versatile disc (DVD), or a Blu-ray (registered trademark) disc (BD), may be used.

Note that, among the above-described servers, any one of the management server 20, the transportation company server 30, and the recovery base server 40 functions as a recovery management server, for example. The server that functions as the recovery management server includes an acquiring unit that acquires, after a transportation vehicle 3a on which the adsorption device capturing carbon dioxide is installed travels, a recovery amount of carbon dioxide captured by the adsorption device 10, and a control unit that generates management information in which the recovery amount is associated with the transportation vehicle 3a on which the adsorption device 10 is installed.

In the recovery system 1, at the transportation base 3 where the transportation vehicle 3a arrives and departs, the adsorption device 10 is installed on the transportation vehicle 3a before traveling, the adsorption device 10 is detached and collected from the returned transportation vehicle 3a, the collected adsorption device 10 is delivered to the recovery base 4, and carbon dioxide captured by the adsorption device 10 is recovered at the recovery base. At this time, the management facility 2a generates management information in which the transportation vehicle 3a is associated with the carbon dioxide recovery amount of the adsorption device 10 installed on the transportation vehicle 3a, acquires information (for example, management information) about the adsorption device 10 from the recovery base 4, determines the adsorption performance (carbon dioxide capturing performance) of the adsorption device 10 to determine the necessity of maintenance or the like, and generates optimization support information regarding the characteristics or the like of the adsorption device 10 to be delivered to the transportation base 3.

In the present embodiment, the carbon dioxide is recovered after the adsorption device 10 is detached from the transportation vehicle 3a (after separation). However, since the adsorption device 10 is associated with the transportation vehicle 3a on which the adsorption device 10 is installed in the management information, even after the adsorption device 10 and the transportation vehicle 3a are separated, it is possible to manage information associating them.

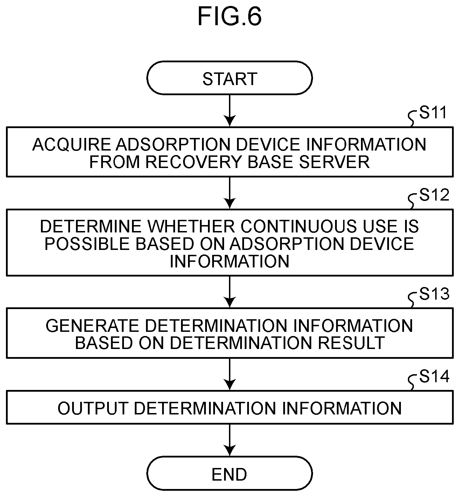

Next, an example of a process executed by the recovery system will be described with reference to FIGS. 5 and 6. In each of the following procedures, an example in which the management server 20 executes a process as the recovery management server will be described. FIG. 5 is a flowchart illustrating an example of a process executed by the recovery system, and illustrates a procedure of a management information generation process by the management server.

The acquisition unit of the management server 20 acquires adsorption device information from the recovery base server (step S1). In this procedure, the description will be given assuming that the adsorption device information includes the recovery amount of carbon dioxide captured by the adsorption device. At this time, the adsorption device information may be the recovery amount of one adsorption device or may include the recovery amount of each of a plurality of adsorption devices.

The control unit of the management server 20 extracts the transportation vehicle on which the adsorption device is installed based on the adsorption device information (step S2). At this time, the management server 20 associates each adsorption device with the transportation vehicle on which the adsorption device is installed.

Then, the control unit generates management information in which the carbon dioxide recovery amount of the adsorption device is associated with the transportation vehicle (step S3). At this time, the management server 20 associates each adsorption device with the transportation vehicle on which the adsorption device is installed.

The control unit stores the management information in the memory of the management server 20 (step S4). This management information is used for performance management of the adsorption device 10, data management of the carbon dioxide recovery amount of each transportation vehicle, calculation of a reward at the time of a reward application, and the like.

FIG. 6 is a flowchart illustrating an example of a process executed by the recovery system, and illustrates a procedure of an information output process regarding the necessity of replacing the adsorption device. Here, an example in which the management server 20 executes a process will be described, but the process may be executed by the transportation company server 30 or the recovery base server 40. Here, an example will be described in which the adsorption performance of the adsorption device is determined using the number of installations on the transportation vehicle 3a (the number of repeated uses), and support information, such as the necessity of replacement, is generated based on the determination result.

The management server 20 acquires information about the adsorption device 10 (adsorption device information) from the recovery base server 40 (step S11). Here, the management server 20 acquires the carbon dioxide recovery amount of the target adsorption device 10 and the number of installations on the transportation vehicle 3a as a use history of the adsorption device 10.

When acquiring the adsorption device information, the management server 20 determines whether the adsorption device 10 can be used continuously based on the acquired adsorption device information (step S12). For example, when the carbon recovery amount is less than a preset threshold and the number of installations exceeds a preset threshold, the management server 20 determines that continuous use is not possible. On the other hand, when the carbon recovery amount exceeds the threshold and the number of installations is equal to or less than the threshold, when the carbon recovery amount exceeds the threshold and the number of installations exceeds the threshold, or when the carbon recovery amount is less than the threshold and the number of installations is equal to or less than the threshold, the management server 20 determines that continuous use is possible. Note that one of the carbon recovery amount and the number of installations may be used to determine whether continuous use is possible.

The management server 20 generates determination information regarding whether continuous use is possible based on the determination result (step S13). The determination information includes whether the target adsorption device 10 can be continuously used.

Then, the management server 20 outputs the determination information (step S14). At this time, for example, the determination information is displayed on a management screen in the management facility 2a or stored in the memory. In the management facility 2a, for example, when it is determined that continuous use is not possible based on the determination information, a person in charge of the facility sends the corresponding adsorption device 10 to the manufacturing facility 2b to replace the adsorbent 101 or the filter, or replaces the adsorption device 10 to be delivered to the transportation base 3 with a new adsorption device 10 and delivers it.

In the present embodiment described above, the used adsorption device 10 is collected at the transportation base 3 where the transportation vehicle 3a arrives and departs, and the collected adsorption device 10 is delivered to the recovery base 4, whereby a plurality of adsorption devices 10 that have captured carbon dioxide can be efficiently collected to recover carbon dioxide. According to the present embodiment, it is possible to efficiently recover carbon dioxide captured by the adsorption device 10 (carbon dioxide capturing material).

In addition, according to the present embodiment, it is possible to efficiently and highly maintain the quality of the adsorption device 10 by the management server 20 collectively managing the quality of the adsorption device 10, such as determining whether the adsorption device 10 can be continuously used and managing the carbon dioxide recovery amount of each adsorption device 10. At this time, since the code 104 for identifying the adsorbent 101 is attached to the adsorbent 101, the condition of the adsorbent 101 can be easily and reliably managed. In addition, by the management server 20 collectively managing the carbon dioxide recovery amount, a process, such as reporting to the J-Credit management base 6, can be made efficient.

Note that, in the present embodiment, the example in which the adsorption device 10 is installed on the transportation vehicle 3a to recover carbon dioxide has been described, but the adsorption device 10 may be installed on air conditioning equipment to recover carbon dioxide, for example. In this case, for example, by disposing the adsorption device 10 in the vicinity of an outdoor unit of an air conditioning facility or a humidifier, the atmosphere (carbon dioxide) can be efficiently passed through the adsorption device 10.

In addition to the above-described processes, following information processes and product flows are also included at each base.
∘ Management facility
   · To develop devices, take measures in the event of malfunctions, and grasp the overall operating conditions, and be responsible for the overall management of the operation, including information control.
   · To grasp the needs of the adsorption device and the (separated) recovery device, and calculate the number of products necessary for the adsorption device and the recovery device.
   · To provide the transportation base (including the drivers) with support on how to use the adsorption device and information system.
   · To provide the recovery base with support on how to use the (separated) recovery device and information system.
   · To provide the manufacturing facility with manufacturing request information/maintenance information, and optimization support information to provide information about manufacturing and maintenance plans without waste.
   · To provide a carbon dioxide utilization (purchasing) company with sales availability information, and provide the recovery base with carbon dioxide cylinders when an order is confirmed.
   · To register with the J-Credit system and acquire authentication information and consideration.
∘ Manufacturing facility
   · To manufacture and maintain devices based on a manufacturing instruction from an operation management company and optimization support information.
   · To ship manufactured devices and maintained devices.
∘ Transportation base
   · To acquire the adsorption device from the management base through purchase or lease.
   · To install the adsorption device on the transportation vehicle, and perform normal cargo transportation.
   · Adsorption of carbon dioxide is repeated by installing the adsorption device capable of adsorbing carbon dioxide on a vehicle and performing normal cargo transportation.
∘ Recovery base
   . In a case where the transportation vehicle directly brings the adsorption device, the adsorption device from which carbon dioxide has been recovered to be ready for adsorption is installed on the transportation vehicle.
   . If the adsorption device needs to be repaired or maintained, the adsorption device is transferred temporarily to the manufacturing facility to take measures for further improving adsorption performance.
∘ Others
   . In a case where the recovery device is installed in the transportation base, the transportation company also serves as the recovery base.
   . In a case where the recovery device is installed in the manufacturing facility, the manufacturing facility also serves as the recovery base.
   · The transportation base that handles the adsorption device delivers carbon dioxide cylinders to a carbon dioxide utilizing company (purchasing company), whereby the circular economy mechanism is established.

In addition to the above-described processes, the following information is managed by the management server 20, and each effect can be obtained.
· The energy cost from adsorption to recovery of carbon dioxide and the clean energy ratio

With regard to the heat required for separation and recovery and the electricity used to operate the device, the amount of energy used from adsorption to recovery (whether clean energy is used or not) for each individual adsorbent (grasping of environmental impact) can be managed.
· Association between the transportation vehicle and the absorbent

It is possible to clearly manage from which vehicle the absorbent material is detached.

It is possible to support a reward payment by managing evidence data at the time of a reward application corresponding to the carbon dioxide recovery amount for each transportation vehicle.

It is possible to pay an individual reward corresponding to the carbon dioxide recovery amount or utilize the association as evidence data at the time of using the J-Credit system or the like.
· The carbon dioxide recovery amount of individual adsorbent

It is possible to optimize the maintenance time and replacement time of the adsorbent and the device.

It is possible to utilize the carbon dioxide recovery amount to grasp whether the individual adsorbent is capable of adsorption and to analyze factors that may cause a decline in capability.
· The use history of adsorbent (including a change history of a vehicle equipped with adsorbent)

By generating information necessary for maintaining or improving the performance of the adsorption device based on the use history of the adsorption device, it is possible to optimize the maintenance time and the replacement time of the adsorbent and the adsorption device.
· Prediction of performance degradation of adsorbent

It is possible to optimize the maintenance time and replacement time of the adsorbent and the adsorption device.
· Prediction of maintenance time of adsorption device (replacement of filter or the like)

It is possible to optimize the maintenance time and replacement time of the adsorbent and the adsorption device.
· Providing service for proposing characteristics of adsorption device

By selecting an adsorbent/filter suitable for the use environment and optimizing the blending, it is possible to increase the recovery amount.

By proposing optimal adsorbent and/or filter characteristics selected based on operation information (operation location, time, vehicle speed) and weather (temperature, humidity, atmospheric pressure) or weather information (forecast), it is possible to improve the carbon dioxide adsorption capability.

Environmental factors of the adsorption performance include temperature, humidity, atmospheric pressure, intake wind speed/air volume, NOx, SOx, and the amount of adhesion of dirt, and by managing and analyzing these pieces of data, it is possible to improve the adsorption performance.

It is possible to maintain and improve the capability of recovering carbon dioxide while reducing maintenance and administrative burdens on a company that owns the transportation vehicle and the driver of the transportation vehicle.

Furthermore, the management server 20 can manage the following information.
∘ Effective information for maintaining adsorption performance
   · Carbon dioxide adsorption performance depends on temperature, humidity (precipitation), atmospheric pressure, atmospheric contamination (NOx, SOx, PM2.5), air volume, and wind speed. It is possible to increase the adsorption amount by accurately grasping the operation information and the use environmental information.
   · Daily driving reports and crew logs are effective for obtaining the operation information, but utilizing digital device information, such as a digital operation recorder, navigation information, a drive recorder, and a crew smartphone, makes information acquisition easier and more accurate.

In typical crew logs (daily driving reports) of a truck driver, the following items are recorded for each driver.
· Name of driver
· The registration number of a commercial motor vehicle in which the driver has been assigned, or any other identification of the commercial motor vehicle
· The starting and ending points, dates/times of the assignment, and the main points along the route and the distance traveled
· In a case of a change of driving, the location and date/time of the change
· In a case of rest or sleep, the location and date/time of the rest or sleep
· In a case of an assignment in a commercial motor vehicle which is an ordinary motor vehicle with a total vehicle weight of 8 tons or more or a maximum loading amount of 5 tons or more, the cargo loading status
· In a case of an assignment with an instruction requiring a mid-route roll call during operation, the content thereof
· As the use environmental information, weather data from meteorological agency or external weather service information is used, and a vehicle is equipped with temperature, humidity, atmospheric pressure, an anemometer, and the like to obtain information.
· Based on the operation information and the use environmental information, performance upgrades and maintenance services for adsorption device are provided
   ∘ Effective information at the time of carbon dioxide separation and recovery
· Predicted recovery amount calculated for each adsorption device by utilizing the operation information and the use environmental information

(The adsorption amount of the adsorption device decreases due to repeated use.)
· Past recovery history information for each adsorption device
· Predicted recovery amount of adsorption device calculated by utilizing the recovery history information

The predicted recovery amount is calculated based on the difference between the initial recovery amount and the current recovery amount, the use history of the adsorption device, and the operation information about the transportation vehicle.
· Information about recovery time, energy use amount, and renewable energy use rate for each adsorption device at separation and recovery
· Carbon dioxide recovery amount of each adsorption device

However, when a separation/recovery device is large, the information is provided per lot rather than per adsorption device.
∘ Optimization support information for adsorption device
   · Optimization is performed by season (spring, summer, fall, winter, rainy season, dry season, pollen period), operation location (city center, countryside, coast, Kanto, Kansai), and driving speed (expressway, general road).

By utilizing past accumulated data, it is possible to provide information on instructions for improving the adsorption device to improve the adsorption performance.
· Maintenance information is provided when adsorption performance deteriorates.

Main improvement instructions include the filter performance grade, adsorbent type (including blending), adsorbent amount, device type (size, shape, material), and shape of device intake opening.
∘ Others
   · Customer information (information about a company that wishes to purchase, information about instruction to deliver actual products)
   · Sales information (recovery amount information from atmosphere)
   · Power supply amount information (information about capability and power generation amount of power generation facility)
   · Contribution commendation (for example, offering product purchase points)
   · Optimization execution information (information about optimization of the adsorption device executed according to improvement instruction)
   · Codes are attached to the adsorption device, recovery device, transportation vehicle, carbon dioxide cylinders, and the like, and information is shared in real time by accessing the server from a mobile terminal or other device (the attachment of codes eliminates the need for input).

Further effects and modifications can be easily derived by those skilled in the art. Thus, the broader aspects of the invention are not limited to the specific details and representative embodiments presented and described above. Accordingly, various modifications can be made without departing from the spirit or scope of the general inventive concept as defined by the appended claims and their equivalents.

### Industrial Applicability

As described above, a recovery management method, a recovery management server, and an adsorption device according to the present invention are suitable for efficiently recovering carbon dioxide captured by a carbon dioxide capturing material.

### Reference Signs List

1 RECOVERY SYSTEM
2 MANAGEMENT BASE
2a MANAGEMENT FACILITY
2b MANUFACTURING FACILITY
3 TRANSPORTATION BASE
3a TRANSPORTATION VEHICLE
4 RECOVERY BASE
4a RECOVERY FACILITY
4b RECOVERY DEVICE
5 PURCHASING COMPANY
6 J-Credit management base
7 J-Credit purchasing company
10 ADSORPTION DEVICE
100 ADSORPTION STRUCTURE
101 ADSORBENT
102 FIRST FILTER
103 SECOND FILTER
104 CODE

## Claims

1. A recovery management method comprising:
recovering, after a transportation vehicle on which an adsorption device capturing carbon dioxide is installed travels, carbon dioxide captured by the adsorption device; and
managing the transportation vehicle and a carbon dioxide recovery amount of the adsorption device installed on the transportation vehicle in association with each other.

2. The recovery management method according to claim 1, wherein
the carbon dioxide is recovered after the adsorption device is separated from the transportation vehicle.

3. A recovery management server comprising:
an acquiring unit configured to acquire, after a transportation vehicle on which an adsorption device capturing carbon dioxide is installed travels, a recovery amount of carbon dioxide captured by the adsorption device; and
a control unit configured to generate management information in which the recovery amount is associated with the transportation vehicle on which the adsorption device is installed.

4. The recovery management server according to claim 3, wherein
the control unit is configured to determine adsorption performance of the adsorption device based on the management information.

5. The recovery management server according to claim 4, wherein
the control unit is configured to calculate a predicted recovery amount of the adsorption device based on the management information.

6. The recovery management server according to claim 3, wherein
the management information further includes a use history of the adsorption device, and
the control unit is configured to generate information necessary for maintaining or improving performance of the adsorption device based on the use history of the adsorption device.

7. The recovery management server according to claim 6, wherein
the management information further includes operation information about the transportation vehicle, and
the control unit is configured to calculate a predicted recovery amount of carbon dioxide based on the use history of the adsorption device and the operation information about the transportation vehicle.

8. An adsorption device comprising:
a plate-shaped adsorbent adsorbing carbon dioxide;
a first filter provided on one adsorption surface side in a thickness direction of the adsorbent; and
a second filter provided on the other adsorption surface side in the thickness direction of the adsorbent, wherein
the adsorbent is provided with a code on a part of a side surface to identify information about the adsorbent.
